# EUROPEAN PATENT SPECIFICATION

(11) **EP 1 230 781 B1**
(45) Date of publication and mention of the grant of the patent: **29.09.2004**
(21) Application number: 00988698.7
(22) Date of filing: 07.11.2000
(51) Int. Cl.: H04M 1/60

(54) **CONFIGURABLE SWITCH FOR A WIRELESS HEADSET**
KONFIGURIEBARER SCHALTER FÜR EINEN SCHNURLOSEN KOPFHÖRER
COMMUTATEUR CONFIGURABLE POUR UNE CASQUE SANS FIL

(30) Priority: 12.11.1999 US 164877 P; 19.07.2000 US 619530
(43) Date of publication of application: 14.08.2002
(73) Proprietor: Telefonaktiebolaget LM Ericsson (publ), 164 83 Stockholm (SE)
(72) Inventor: WEINANS, Geert Hendrik, NL-9468 GL Annen (NL); FERGUSON, Edward, NL-9713 DC Groningen (NL); KAIN, Onno, NL-7823 CN Emmen (NL)
(74) Representative: Vigars, Christopher Ian
(86) International application number: PCT/EP2000/010950
(87) International publication number: WO 2001/037524

(56) References cited:
- WO-A-99/03294
- WO-A-99/45686
- WO-A-99/57937
- US-A- 4 558 178
- US-A- 5 113 428
- US-A- 5 881 370

## Description

### FIELD OF THE INVENTION

The present invention relates to a wireless headset and, more particularly, to a wireless headset that is wearable on either the right or left ear, and that has two or more switches for controlling headset or other functions.

### BACKGROUND

Wireless headsets are known. For example, in copending application, U.S. Patent Application No. 09/438,326, "Wireless Voice-Activated Remote Control Device", filed November 12, 1999, a wireless headset has been proposed that enables the wearer to control one or more functions relating to the headset itself, the device that the headset is in wireless communication with, or both. The wireless headset has one or more switches, the activation of which, enables a user to initiate, accept or terminate a telephone call. In this case, the wireless headset is in wireless communication with a telephone, which acts as an intermediary in the connection, forwarding the informational content of the call between the user of the headset and the called/calling party at the other end of the connection. Furthermore, a wireless headset according to the preamble of claim 1 is known from document WO 99 45 686. Moreover, document US 5 113 428 discloses a wireless headset including multiple switches and logic configured to control functions of those multiple switches.

In addition, wireless headsets which may be worn on the ear are known. In use, the user slips, for example, a loop portion over the outer ear, so that the speaker is held flush against the ear, the headset being oriented so that the microphone extends in the direction of the user's mouth. Further, the user may be given the option of wearing the headset on either the left or the right ear. When properly positioned so that the speaker is flush against one ear (e.g., the left ear) with the microphone extending in the direction of the user's mouth, a first switch assumes the vertically top position while the other one or more switches assume a vertically bottom position. However, when worn over the other ear (in this example, the right ear), the roles of the first and second switches are reversed. A similar situation can arise when the switches are horizontally displaced with respect to one another.

This can present problems to the user, who always expects one switch (e.g., the top switch) to perform a function such as "volume up", while the other switch (e.g., the bottom switch) performs an alternative function such as "volume down. " Therefore, there exists a need to provide a wireless headset in which the functionality of switches may be reconfigured such that regardless of the physical orientation in which the headset is worn, i.e., right ear or left ear, the functionality of the switches remains constant (i.e., the top button always performs the same function).

### SUMMARY OF THE INVENTION

As a solution to the above-described problems, a headset is provided that has a mechanism that permits the roles of the switches to be reconfigurable. The headset comprises one or more switches and logic configured to control the function of the one or more switches.

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

### BRIEF DESCRIPTION OF THE DRAWINGS

A more complete understanding of the present invention may be derived by referring to the detailed description and claims when considered in connection with the Figures, wherein like reference numbers refer to similar items throughout the Figures, and:
FIG. 1A shows an exemplary wireless headset in right ear configuration;
FIG. 1B shows an exemplary wireless headset in left ear configuration;
FIG. 2 shows a block diagram of a wireless headset device and a mobile telephone according to an embodiment of the present invention;
FIG. 3 shows a state diagram of a state machine according to an embodiment of the present invention;
FIG. 4 shows a flow chart describing reconfiguration of the control switches according to an embodiment of the present invention; and
FIG. 5 shows a flow chart describing reconfiguration of the control switches according to an alternative embodiment of the present invention.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one of ordinary skill in the art that the present invention may be practiced in other embodiments that depart from these specific details. In other instances, detailed descriptions of well-known methods, devices, and circuits are omitted so as not to obscure the description of the present invention with unnecessary detail.

These and other aspects of the invention will now be described in greater detail in connection with a number of exemplary embodiments. To facilitate an understanding of the invention, many aspects of the invention are described in terms of sequences of actions to be performed by elements of a computer system. It will be recognized that in each of the embodiments, the various actions could be performed by specialized circuits, by program instructions being executed by one or more processors, or by a combination of both. Moreover, the invention can additionally be considered to be embodied entirely within any form of computer readable storage medium having stored therein an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiment may be referred to herein as "logic configured to" perform a described action.

In general, the invention relates to a wireless headset device. More particularly, the present invention relates to a headset which includes one or more switches for controlling the headset and which may be worn on either ear of the user.

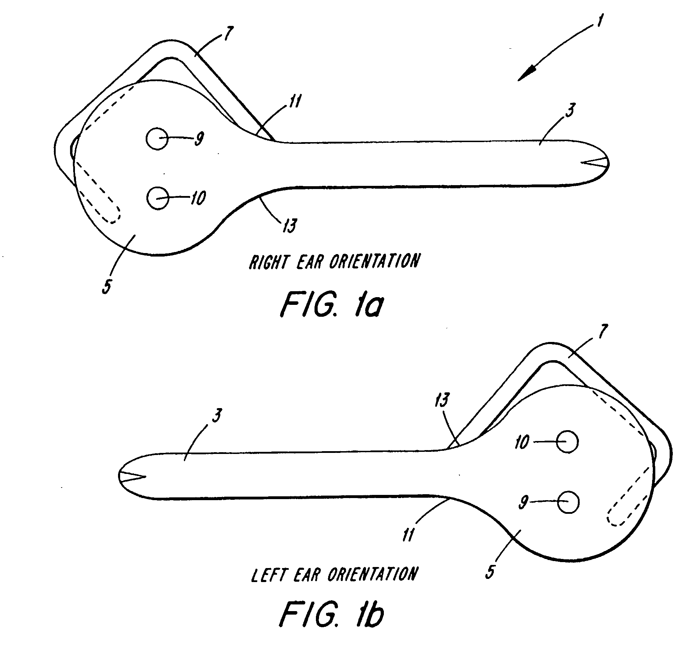

Figures 1A and 1B show an exemplary headset 1 in both the right and left ear configurations. The headset 1 includes a microphone 3 attached to a speaker 5. Further attached to the speaker 5 is a loop portion 7. In Figure 1A the loop portion 7 is attached to the speaker 5 by means of a flexible connection 11, such as any type of hinge, so that the plane of the loop portion 7 can be angularly displaced from the plane of the speaker 5. This configuration allows the user to wear the headset on the right ear. However, as shown in Figure 1B, the headset may be configured for the left ear by attaching the loop portion 7 to the speaker 5 by means of flexible connection 13. The headset further includes circuitry (not shown) as described below, so that it can control its own functions and/or functions of a remotely controlled device. As part of this circuitry, the headset 1 includes one or more buttons for activating one or more corresponding switches. In the exemplary embodiment, a first button 9 and a second button 10, associated with a first and second switch (not shown) are illustrated. In alternative embodiments, the headset 1 may have more than two buttons or a single button may alternatively activate different switches as a function of the direction of pressure applied by the user. For example, pressing on the top of the button may activate one switch, while pressing on the bottom of the button may activate a different switch.

The headset includes logic (not shown) that permits the functions of the first and second switches to be programmable. Programming may be accomplished by the user indicating the desired configuration or automatically in response to the mechanical configuration of the headset. In either case, the selected configuration is supplied to the headset and the switches are configured accordingly.

In one embodiment the programing is accomplished by connecting the headset to the electronic device with which it is intended to be in communication (e.g., a mobile telephone). This connection may be via wire or it may be wireless. When connected, a configuration menu is shown or otherwise made accessible in the electronic device. The user can then utilize any of a variety of input devices to supply values indicating whether the headset is to be worn on the left side or the right side of the head. The selected value is then signaled to the headset, which may store it in a memory. The headset uses this value to configure the switches accordingly. For example, it might assign the function of the volume key(s) to either increase or decrease the volume, depending on the intended headset orientation. Other controllable features include microphone amplification and noise cancellation. Additional features include commands to be wirelessly communicated to the electronic device (e.g., telephone) for controlling features and/or operation of the electronic device.

In alternative embodiments, a voice command may be used and processed either in the electronic device (e.g., a telephone) or in the headset 1. The voice command indicates the desired switch configuration (e.g., headset orientation).

In yet another alternative, a mechanical control may be provided on the headset for changing the configuration of the switches. For example, another switch may be provided for selectively controlling electronic signals which, in turn, controls the programming of the switch configuration. Alternatively, a mechanical control may simply re-route signals within the headset to reverse the roles of the switches. In yet another alternative, the mechanical reconfiguration of the headset to fit the left or right side of the head can automatically affect a mechanical or optical (etc.) switch for the headset configuration. Herein any reference to the mechanical configuration control switch includes any one of the alternatives presented above.

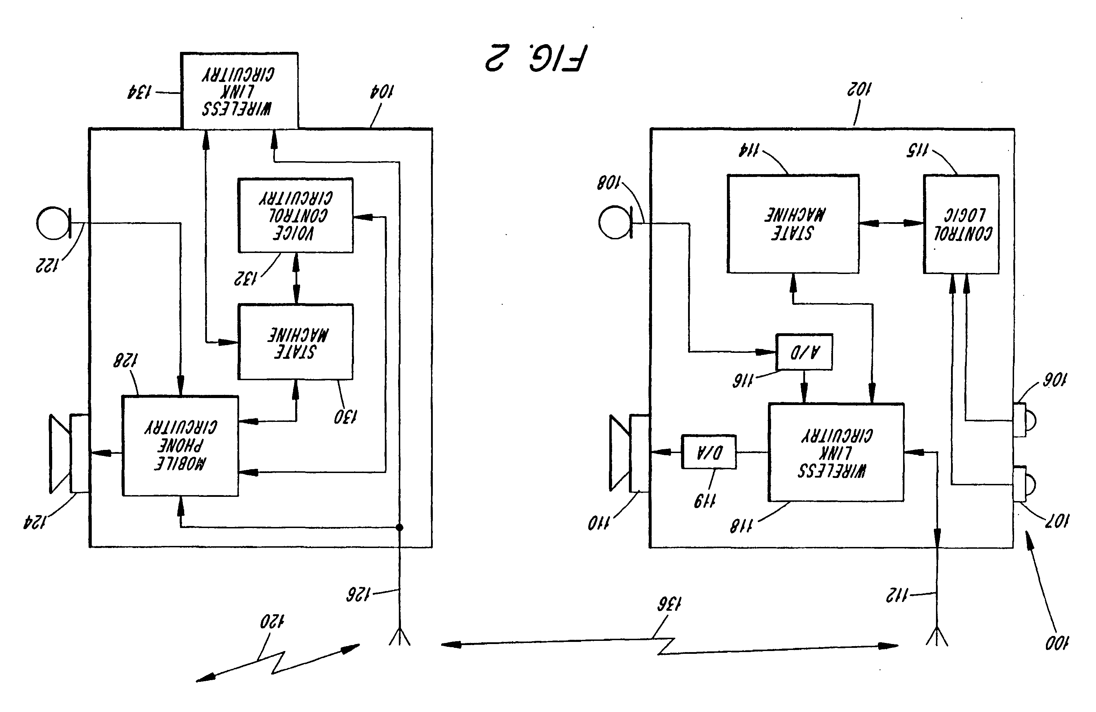

Figure 2 shows a block diagram of a wireless remote control system 100 including a headset device 102, and an electronic device, exemplified here by a mobile telephone 104, according to one embodiment of the present invention. Headset device 102 includes input devices or buttons 9 and 10, which enable a user to manually activate one or more switches 106 and 107, a microphone 108, a speaker 110 and an antenna 112. Headset device 102 also includes a state machine 114, control logic 115, an analog-to-digital (A/D) converter 116, wireless link circuitry 118, and a digital-to-analog (D/A) converter 119. Headset device 102 may also include other clips, buttons, VELCRO, bands, straps, pads or the like (not shown) to facilitate attachment to a user.

Mobile telephone 104 could be any type of cellular telephone, now known or later developed, using any type of transmission technique for communication with other communication devices such as satellites, base stations, plain old telephones, or other mobile phones over a wireless communication link 120. Mobile telephone 104 includes a microphone 122, a speaker 124 and an antenna 126. Mobile telephone 104 also includes a mobile telephone circuitry 128, a state machine 130, and voice control circuitry 132. The mobile telephone circuitry 128 performs all functions necessary to enable the mobile telephone 104 to establish and utilize the wireless communication link 120. For example, the mobile telephone circuitry 128 may be particularly adapted to work in accordance with Global System for Mobile communications (GSM) standards, which are well known. Of course, the use of GSM is merely exemplary, and is not essential to the invention.

In addition to the above mentioned components, mobile telephone 104 includes wireless link circuitry 134. The purpose of the wireless link circuitry 134 is to establish a second wireless link, independent of the wireless communication link 120. The purpose of this second wireless link will be further described below. Wireless link circuitry 134 can be connected to mobile telephone 104 through a plug connection as shown in Figure 2. Alternatively, wireless link circuitry 134 can be included within mobile telephone 104 (not shown).

Referring back to Figure 2, headset device 102 communicates with mobile telephone 104 via a wireless communication link 136, which is the second wireless link referred to above. An exemplary wireless communication link suitable for use as the wireless communication link 136 can be established using BLUETOOTH™ wireless technology, which is well known. More information about the BLUETOOTH™ wireless technology specification can be found on the Internet at www.bluetooth.com. BLUETOOTH is a trademark owned by Telefonaktiebolaget LM Ericsson, Sweden.

System 100 permits headset device 102 to utilize wireless communication link 136 to transmit control signals to mobile telephone 104, for example, to place a call, or to receive control signals from mobile telephone 104, for example, to answer a call. Headset device 102 may transmit one or more control signals to mobile telephone 104 to elicit many types of responses from mobile telephone 104. In addition to placing a call or receiving a call, such a response might be to determine the status of mobile telephone 104, to activate circuitry in mobile telephone 104, to receive any information about mobile telephone 104 or to control mobile telephone 104.

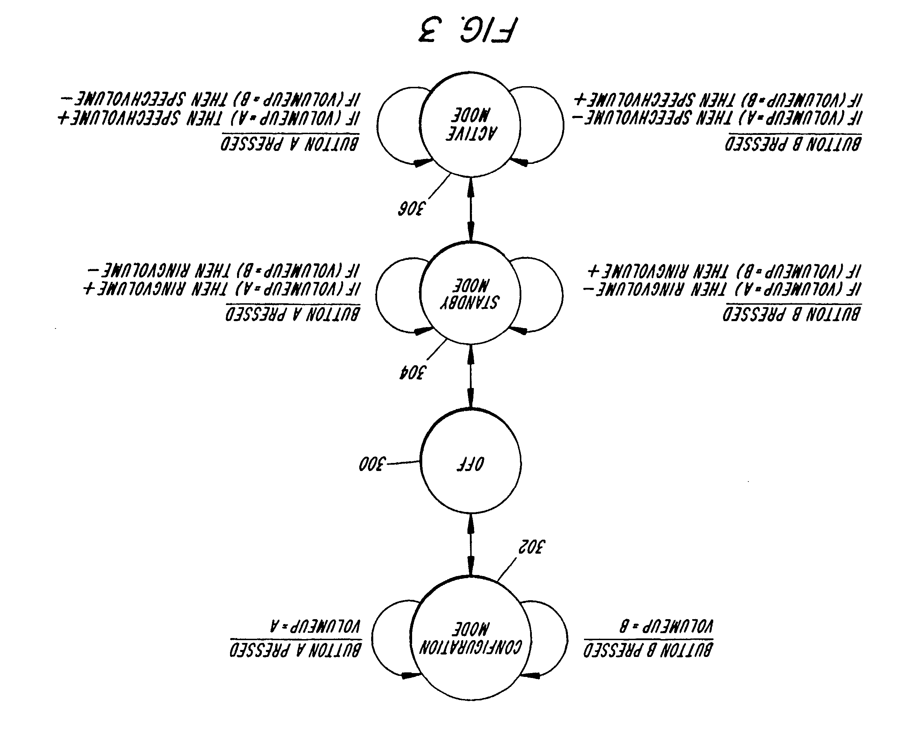

Figure 3 shows a state diagram of state transitions carried out by state machine 114 of headset device 102 according to an embodiment of the present invention. With reference to both Figures 1 and 3, the various states of state machine 114 will now be described. State machine 114 begins in OFF state 300. When a user desires to use headset device 102, the user activates the headset. Activation of the headset may be accomplished, for example, by the user depressing button 9 for a period of time. Upon activation, a determination is made to either transition the headset into Configuration Mode 302 or Standby Mode 304. This determination may be made based on the period time for which the user depresses one or more buttons. For example, a very long press, for example 6 or more seconds, of button 9 may transition the headset device 102 from an OFF state 300 to Configuration Mode 302, while a short press, for example less than 2 seconds, of button 9 may transition the headset device 102 from an OFF to Standby Mode 304.

Once in configuration mode 302, the user may select the desired switch configuration. For example, in the case in which the switch functionality is volume up and volume down, the switch selected by the user, once in configuration mode, is designated in control logic 115 as the volume up switch. The state then returns to OFF state 300.

Upon transitioning to standby mode 304, state machine 114 causes wireless link circuitry 118 to transmit a control signal to mobile telephone 104, thereby establishing a wireless communications link between headset device 102 and mobile telephone 104. When headset device 102 is in standby mode 304, it may transmit different control signals to mobile telephone 104 to alternatively initiate a call using voice activated dialing, receive an incoming call, or terminate wireless communication link (not shown).

Active mode 306 is entered by processing an incoming or outgoing call. While in active mode 306, the user may adjust the volume of voice signals being received from mobile telephone 104 by depressing button 9 or 10 with one or more short presses. In response, a control signal, indicating the function associated with the depressed switch 106 or 107 (i.e. volume up or down), is transmitted to mobile telephone 104 to change the amplitude of the third party voice signals. Alternatively, by depressing button 9 or 10, the control signal is communicated to circuitry within remote control device 102 to change the amplitude of the received third party voice signals. In either case, the amplitude of the third party voice signals is alternatively increased or decreased in response to a signal received from control logic 115. For example, if the headset 102 is oriented for the right ear, or if the user has indicated that the buttons should be configured in right ear orientation, control logic 115 will link the switch (e.g., switch 106) associated with button 9 with the volume up function.

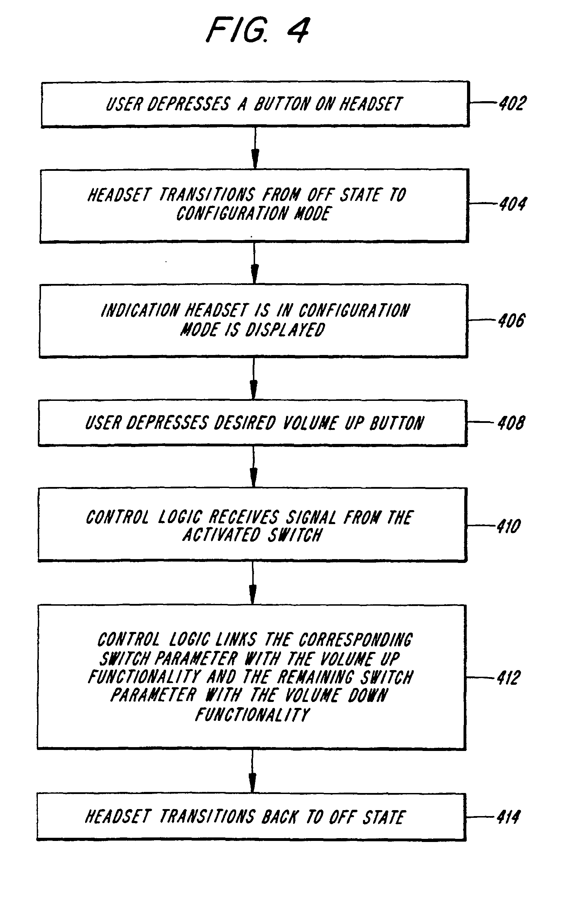

Figure 4 shows a flow chart describing reconfiguration of the control logic for the switches according to an embodiment of the present invention. While the headset is in an OFF state, the user may press button 10 for a period of time (e.g., 6 seconds or more) to transition the headset into configuration mode (step 402). An indication that the headset is in configuration mode is communicated to the user, for example as a tone or a series of beeps (steps 404 and 406). Once in configuration mode, the next switch selected by the user is designated as volume up (step 408). The control logic receives a signal from the activated switch (step 410) and links the corresponding switch parameter with the volume up function (step 412). Thereafter, the headset transitions back to the OFF state (step 414).

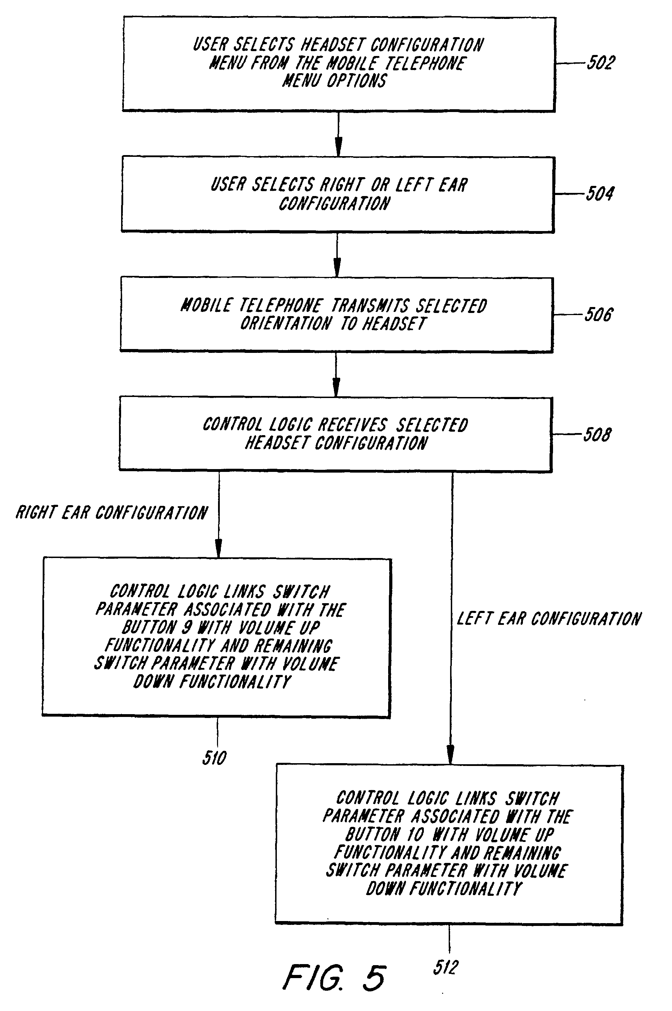

In an alternative embodiment, depicted in Figure 5, the user may reconfigure the switches using the mobile telephone 104 menus. The user accesses the headset configuration menu from the mobile telephone menu options (step 502). Then the user indicates, using whatever input device is available, the desired orientation (step 504). For example, left ear configuration or right ear configuration. The selected configuration is transmitted to the headset (step 506). Based on the received configuration signal (step 508), the control logic either links the switch parameter associated with button 9 (right ear configuration) (step 510) or the switch parameter associated with button 10 (left ear configuration) with the volume up functionality (step 512). Alternatively, the selected configuration may be stored in the mobile telephone 104 and transmitted to the headset during the next connection (i.e., the next time the state table 114 transitions into standby mode 304).

The invention has been described with reference to particular embodiments. However, it will be readily apparent to those skilled in the art that it is possible to embody the invention in specific forms other than those of the preferred embodiments described above. This may be done without departing from the scope of the invention as defined by the appended claims.

For example, the remote control device 102 has been illustrated by a headset. However, this is not essential. Rather, the inventive techniques can be adapted for use in any other type of device having characteristics described herein with respect to the headset device 102.

Furthermore, the headset device 102 has been described as a device having multiple buttons 9 and 10, with user commands distinguished from one another based on whether a long or short press has been performed with respect to a single button. In other embodiments, further distinctions between commands can be made by further differentiating between other length presses, the identity of the button pressed, and/or between numbers of short and/or long presses.

Thus, the preferred embodiment is merely illustrative and should not be considered restrictive in any way. The scope of the invention is given by the appended claims, rather than the preceding description, and all variations and equivalents which fall within the range of the claims are intended to be embraced therein.

## Claims

1. A wireless headset (1) adapted to communicate with a communications device over a wireless communications link, the headset comprising:
a single earphone (5) adapted to be used in a right or left ear configuration ;
a first switch (106);
logic configured to control a function of the first switch (115); **characterised in that** the headset comprises a second switch (107);
logic configured to control a function of the second switch (115), wherein the logic configured to control a function of the first switch and the logic configured to control a function of the second switch is programable by the user.

2. The headset of claim 1, wherein:
the logic configured to control the function of the first switch (106) includes a first memory for storing an indicator of the function of the first switch; and
the logic configured to control the function of the second switch (107) includes a second memory for storing an indicator of the function of the second switch.

3. The headset of claim 1, further comprising :
a mechanical configuration control switch, wherein said mechanical configuration control switch is adapted to provide signals to the logic configured to control the function of the first switch and to the logic configured to control the function of the second switch.

4. The headset of claim 1, wherein:
the logic configured to control the function of the first switch (106) and the logic configured to control the function of the second switch (107) is programable by the user.

5. The headset of claim 1, wherein:
the first and second switches (106, 107) are adapted to activated via first and second buttons (9, 10) respectively.

6. The headset of claim 1, wherein:
the first and second switches are adapted (106, 107) to control the volume of the headset (1).

7. The headset of claim 1, further comprising:
wireless link circuitry (118) configured to control communication between the headset and an associated electronic device.

8. The headset of claim 7, wherein:
the wireless link circuitry (118) includes BLUETOOTH™ wireless technology.

9. The headset of claim 7, wherein:
the wireless link circuitry (118) includes voice recognition logic for responding to a voice command.

10. A method of selecting the orientation of a wireless headset (1) adapted to communicate with a communications device over a wireless communications link, the headset including a single earphone (5) and two or more switches (106, 107) for selecting a function associated with the headset, wherein the function of the two or more switches (106, 107) is controlled by the orientation of the headset, the method being **characterised by** the steps of:
placing the headset in configuration mode;
selecting the orientation of the headset; and
storing an indication of the function associated with the two or more switches based on the orientation selection, wherein the orientation selected is either right ear configuration or left ear configuration.

11. The method of claim 10, wherein the headset (1) communicates with an associated electronic device via wireless link circuitry (118); and
wherein the wireless link circuitry (118) includes BLUETOOTH™ wireless technology.

12. The method of claim 10, wherein the function associated with the two or more switches is volume control.

13. The method of claim 10, wherein the orientation selection is accomplished through the use of voice recognition logic.

14. The method of claim 10, wherein the orientation selection is accomplished through a configuration menu of an associated electronic device.

15. The method of claim 14, wherein said associated electronic device is a mobile telephone.

## Patentansprüche

1. Ein drahtloser Kopfhörer (1), der angepasst ist, um mit einer Kommunikationsvorrichtung über eine drahtlose Kommunikationsverbindung zu kommunizieren, wobei der Kopfhörer umfasst:
einen einzelnen Ohrhörer (5), der angepasst ist, um in einer Konfiguration für ein rechtes oder ein linkes Ohr verwendet zu werden;
einen ersten Schalter (106);
eine zum Steuern einer Funktion des ersten Schalters konfigurierte Logik (115);
**dadurch gekennzeichnet, dass** der Kopfhörer umfasst:
einen zweiten Schalter (107);
eine zum Steuern einer Funktion des zweiten Schalters konfigurierte Logik (115), wobei die zum Steuern einer Funktion des ersten Schalters konfigurierte Logik und die zum Steuern einer Funktion des zweiten Schalters konfigurierte Logik durch den Nutzer programmierbar ist.

2. Der Kopfhörer nach Anspruch 1, wobei:
die zum Steuern der Funktion des ersten Schalters (106) konfigurierte Logik einen ersten Speicher zum Speichern eines Anzeigers der Funktion des ersten Schalters einschließt; und
die zum Steuern der Funktion des zweiten Schalters (107) konfigurierte Logik einen zweiten Speicher zum Speichern eines Anzeigers der Funktion des zweiten Schalters einschließt.

3. Der Kopfhörer nach Anspruch 1, weiterhin umfassend:
einen mechanischen Konfigurationssteuerungsschalter, wobei der mechanische Konfigurationssteuerungsschalter angepasst ist, um Signale bereitzustellen an die zum Steuern der Funktion des ersten Schalters konfigurierte Logik und die zum Steuern der Funktion des zweiten Schalters konfigurierte Logik.

4. Der Kopfhörer nach Anspruch 1, wobei:
die zum Steuern der Funktion des ersten Schalters (106) konfigurierte Logik und die zum Steuern der Funktion des zweiten Schalters (107) konfigurierte Logik durch den Nutzer steuerbar ist.

5. Der Kopfhörer nach Anspruch 1, wobei:
der erste und zweite Schalter (106, 107) angepasst sind, um über erste bzw. zweite Tasten (9, 10) aktiviert zu werden.

6. Der Kopfhörer nach Anspruch 1, wobei:
der erste und zweite Schalter (106, 107) angepasst sind, um die Lautstärke des Kopfhörers (1) zu steuern.

7. Der Kopfhörer nach Anspruch 1, weiterhin umfassend:
einen Schaltkreis für eine drahtlose Verbindung (118), der zum Steuern einer Kommunikation zwischen dem Kopfhörer und einer zugehörigen elektronischen Vorrichtung konfiguriert ist.

8. Der Kopfhörer nach Anspruch 7, wobei:
der Schaltkreis für eine drahtlose Verbindung (118) drahtlose BLUETOOTH™-Technologie einschließt.

9. Der Kopfhörer nach Anspruch 7, wobei:
der Schaltkreis für eine drahtlose Verbindung (118) eine Spracherkennungslogik zum Ansprechen auf einen Sprachbefehl einschließt.

10. Ein Verfahren zum Auswählen der Ausrichtung eines drahtlosen Kopfhörers (1), der angepasst ist, um mit einer Kommunikationsvorrichtung über eine drahtlose Kommunikationsverbindung zu kommunizieren, und der Kopfhörer einen einzelnen Ohrhörer (5) und zwei oder mehr Schalter (106, 107) zum Auswählen einer dem Kopfhörer zugehörigen Funktion einschließt, wobei die Funktion der zwei oder mehr Schalter (106, 107) durch die Ausrichtung des Kopfhörers gesteuert wird, wobei das Verfahren **gekennzeichnet ist durch** die Schritte:
Verbringen des Kopfhörers in einen Konfigurationsmodus;
Auswählen der Ausrichtung des Kopfhörers; und
Speichern einer Anzeige der den zwei oder mehr Schaltern zugehörigen Funktion basierend, auf der Ausrichtungsauswahl, wobei die ausgewählte Ausrichtung entweder eine Konfiguration für ein rechtes Ohr oder eine Konfiguration für ein linkes Ohr ist.

11. Das Verfahren nach Anspruch 10, wobei der Kopfhörer (1) mit einer zugehörigen elektronischen Vorrichtung über einen Schaltkreis für eine drahtlose Verbindung (118) kommuniziert; und
wobei der Schaltkreis für eine drahtlose Verbindung (118) drahtlose BLUETOOTH™-Technologie einschließt.

12. Das Verfahren nach Anspruch 10, wobei die den zwei oder mehr Schaltern zugehörige Funktion eine Lautstärkesteuerung ist.

13. Das Verfahren nach Anspruch 10, wobei die Ausrichtungsauswahl durch das Verwenden von Spracherkennungslogik erreicht wird.

14. Das Verfahren nach Anspruch 10, wobei die Ausrichtungsauswahl durch ein Konfigurationsmenü einer zugehörigen elektronischen Vorrichtung erreicht wird.

15. Das Verfahren nach Anspruchs 14, wobei die zugehörige elektronische Vorrichtung ein Mobiltelefon ist.

## Revendications

1. Casque sans fil (1) conçu pour communiquer avec un dispositif de communications par une liaison de communications sans fil, le casque comportant :
un écouteur unique (5) conçu pour être utilisé dans une configuration pour l'oreille droite ou l'oreille gauche ;
un premier commutateur (106) ;
une logique configurée pour commander une fonction du premier commutateur (115) ; **caractérisé en ce que** le casque comporte un second commutateur (107) ;
une logique configurée pour commander une fonction du second commutateur (115), dans lequel la logique configurée pour commander une fonction du premier commutateur et la logique configurée pour commander une fonction du second commutateur sont programmables par l'utilisateur.

2. Casque selon la revendication 1, dans lequel :
la logique configurée pour commander la fonction du premier commutateur (106) comprend une première mémoire destinée à stocker un indicateur de la fonction du premier commutateur ; et
la logique configurée pour commander la fonction du second commutateur (107) comprend une seconde mémoire destinée à stocker un indicateur de la fonction du second commutateur.

3. Casque selon la revendication 1, comportant en outre :
un commutateur de commande de configuration mécanique, dans lequel ledit commutateur de commande de configuration mécanique est conçu pour fournir des signaux à la logique configurée pour commander la fonction du premier commutateur et à la logique configurée pour commander la fonction du second commutateur.

4. Casque selon la revendication 1, dans lequel :
la logique configurée pour commander la fonction du premier commutateur (106) et la logique configurée pour commander la fonction du second commutateur (107) sont programmables par l'utilisateur.

5. Casque selon la revendication 1, dans lequel :
les premier et second commutateurs (106, 107) sont conçus pour être activés par l'intermédiaire des premier et second boutons (9, 10), respectivement.

6. Casque selon la revendication 1, dans lequel :
les premier et second commutateurs (106, 107) sont conçus pour commander le volume du casque (1).

7. Casque selon la revendication 1, comportant en outre :
un circuit de liaison sans fil (118) configuré pour commander une communication entre le casque et un dispositif électronique associé.

8. Casque selon la revendication 7, dans lequel :
le circuit de liaison sans fil (118) comprend une technologie sans fil BLUETOOTH™.

9. Casque selon la revendication 7, dans lequel :
le circuit de liaison sans fil (118) comprend une logique de reconnaissance vocale destinée à répondre à un ordre vocal.

10. Procédé de sélection de l'orientation d'un casque sans fil (1) conçu pour communiquer avec un dispositif de communications par une liaison de communications sans fil, le casque comprenant un écouteur unique (5) et deux ou plus de deux commutateurs (106, 107) pour sélectionner une fonction associée au casque, dans lequel la fonction des deux ou plus de deux commutateurs (106, 107) est commandée par l'orientation du casque, le procédé étant **caractérisé par** les étapes qui consistent :
à placer le casque dans un mode de configuration ;
à sélectionner l'orientation du casque ; et
à stocker une indication de la fonction associée aux deux ou plus de deux commutateurs sur la base de la sélection d'orientation, dans lequel l'orientation sélectionnée est une configuration pour l'oreille droite ou une configuration pour l'oreille gauche.

11. Procédé selon la revendication 10, dans lequel le casque (1) communique avec un dispositif électronique associé par l'intermédiaire d'un circuit de liaison sans fil (118) ; et
dans lequel le circuit de liaison sans fil (118) comprend une technologie sans fil BLUETOOTH™.

12. Procédé selon la revendication 10, dans lequel la fonction associée aux deux ou plus de deux commutateurs est une commande de volume.

13. Procédé selon la revendication 10, dans lequel la sélection d'orientation est effectuée par l'utilisation d'une logique de reconnaissance vocale.

14. Procédé selon la revendication 10, dans lequel la sélection d'orientation est effectuée par un menu de configuration d'un dispositif électronique associé.

15. Procédé selon la revendication 14, dans lequel ledit dispositif électronique associé est un téléphone mobile.
